(19) Europäisches Patentamt
European Patent Office
Office européen des brevets

(11) **EP 4 335 698 A1**

(12) **EUROPEAN PATENT APPLICATION**

(43) Date of publication:
**13.03.2024 Bulletin 2024/11**

(21) Application number: **23196488.3**

(22) Date of filing: **11.09.2023**

(51) International Patent Classification (IPC):
**B60Q 1/12** (2006.01)    **F21W 102/19** (2018.01)

(52) Cooperative Patent Classification (CPC):
**B60Q 1/12;** B60Q 2300/322; F21W 2102/19

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022 IT 202200018474**

(71) Applicant: **FERRARI S.p.A.
41100 Modena (IT)**

(72) Inventor: **SECONDI, Andrea
41100 MODENA (IT)**

(74) Representative: **Studio Torta S.p.A.
Via Viotti, 9
10121 Torino (IT)**

(54) **METHOD FOR CONTROLLING THE ORIENTATION OF A LIGHT BEAM FOR A MOTOR VEHICLE, AND MOTOR VEHICLE**

(57)    A method for controlling the orientation of a light beam (F) for a motor vehicle (1) is described comprising the steps of i) adjusting the orientation of a light beam (F) arranged at the front relative to a normal forward moving direction of the motor vehicle (1); ii) acquiring a map (17) of a path (P) followed by said motor vehicle (1); iii) acquiring a current position (Q) of the motor vehicle (1) along the path (P); and iv) defining a point (P_p) of the path (P) to which to orient the light beam (F), based on the map (17) and on the current position (Q); and v) rotating the light beam (F) relative to the motor vehicle (1) so as to light the point (P_p) before the motor vehicle (1) reaches the point (P_p).

FIG. 2

EP 4 335 698 A1

## Description

CROSS-REFERENCE TO RELATED APPLICATIONS

This patent application claims priority from Italian patent application no. 102022000018474 filed on 12 September, 2022, the entire disclosure of which is incorporated herein by reference.

TECHNICAL FIELD

The present invention relates to a method for controlling the orientation of a light beam for a motor vehicle and to a motor vehicle.

BACKGROUND

Motor vehicles are known that comprise the following:

- a pair of front wheels;
- a steering mechanism comprising, in turn, a steering wheel that can be driven to rotate the front wheels so as to enable the motor vehicle to follow a curved trajectory; and
- a front lighting assembly designed to generate a light beam that lights the front zone of the motor vehicle.

Front lighting assemblies are also known that are operationally connected to the steering mechanism so as to orient the light beam on a horizontal plane and on one side of the motor vehicle, so as to enable the light beam to light a curved region of the road profile.

For example, according to a known solution, the lighting assembly is rotated by an angle associated or coinciding with a steering angle imposed by the driver on the front wheels via the steering wheel of the steering mechanism.

In the sector, it is known that the driver anticipates with their gaze the driving trajectory set in relation to the steering action imposed on the steering mechanism via the steering wheel.

As a result, the driver turns their gaze towards the curved region of the road profile before driving the steering wheel.

Therefore, the driver visually perceives the curved region as still not lit right in the moments immediately preceding the actual setting of the steering action.

This situation generates the risk that the driver does not readily, visually perceive any obstacles or people present in the curved region of the road profile towards which the motor vehicle is proceeding.

There is a need, in the sector, to improve the comfort of the driver, enabling them to visually perceive, suitably in advance, the obstacles or people present in the curved region of the road profile.

SUMMARY

The purpose of the present invention is to produce a method for controlling the orientation of a light beam for a motor vehicle, which makes it possible to meet the need mentioned above.

The above-mentioned purpose is achieved with the present invention, as it relates to a method for controlling the orientation of a light beam for a motor vehicle according to what is defined in claim 1.

The present invention also relates to a motor vehicle according to what is defined by claim 7.

BRIEF DESCRIPTION OF THE DRAWINGS

In order to better understand the present invention, a non-limiting preferred embodiment thereof will now be described by way of example with reference to the accompanying drawings, in which:

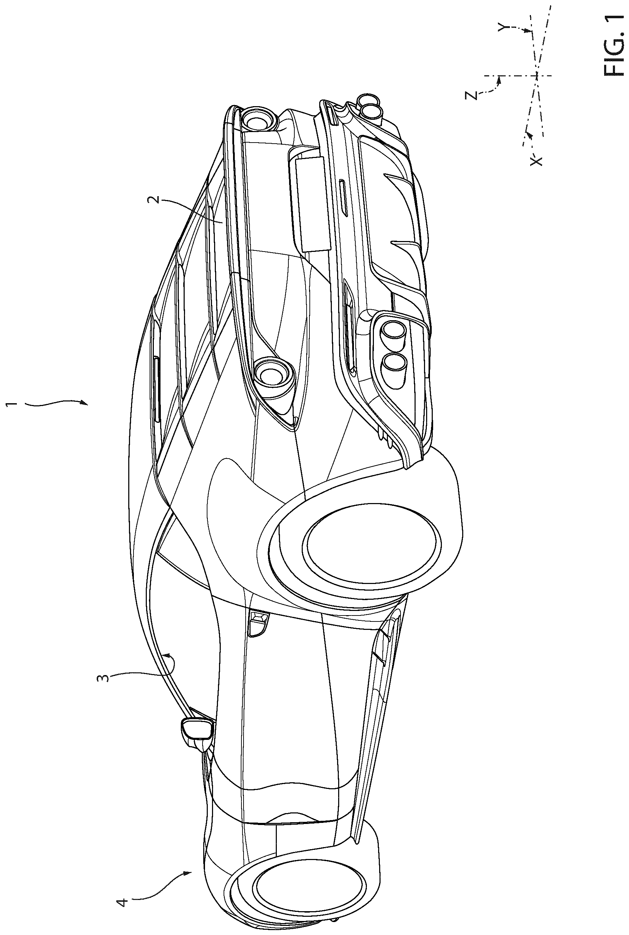

- Figure 1 is a perspective view of a motor vehicle produced according to the present invention;
- Figure 2 is a view from above of the motor vehicle in Figure 1 in a phase of driving along a straight region of a road path immediately preceding a curved region of the path itself; and
- Figure 3 is a functional diagram of some components of the motor vehicle in Figure 2, with parts removed for clarity.

DESCRIPTION OF EMBODIMENTS

With reference to the attached figures, reference number 1 indicates a motor vehicle comprising a body 2 defining a passenger compartment 3 and a front lighting assembly 4.

It should be specified that, below in this description, expressions such as "above", "below", "in front of", "behind" and the like are used with reference to the normal movement of the motor vehicle 1.

It is also possible to define:

- a longitudinal axis X integral with the motor vehicle 1, arranged, in use, horizontal and parallel to a normal forward moving direction of the motor vehicle 1;
- a transversal axis Y integral with the motor vehicle 1, arranged, in use, horizontal and orthogonal to the axis X; and
- an axis Z integral with the motor vehicle 1, arranged, in use, vertical and orthogonal to the axes X, Y.

The lighting assembly 4 can be driven to generate a light beam F in a region in front of the motor vehicle 1.

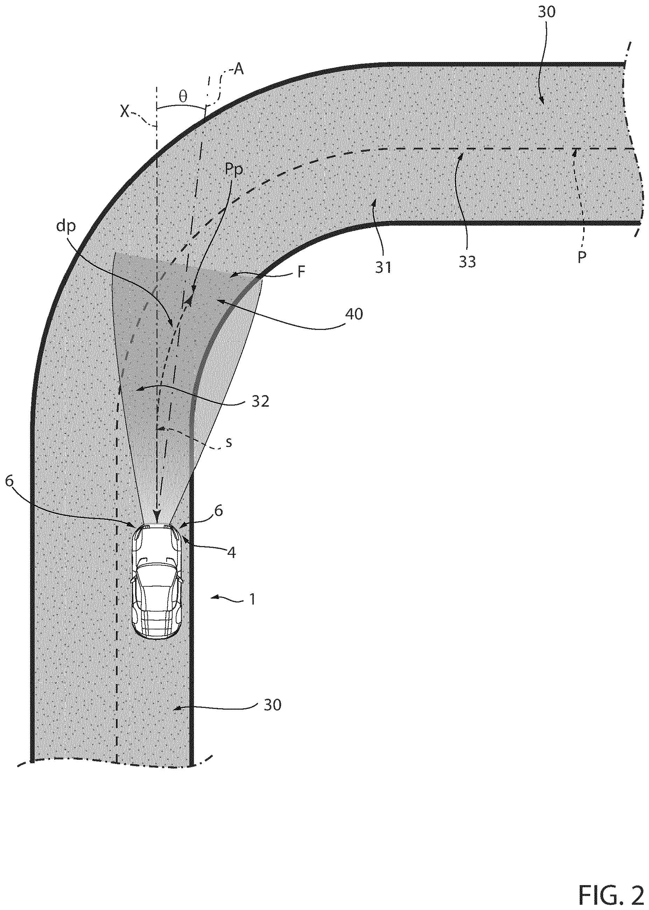

In a first embodiment illustrated in Figure 2, the lighting assembly 4 comprises a pair of headlamps 6 that can rotate around respective axes parallel to the axis Z, so as to rotate the orientation of the light beam F.

In a second embodiment not illustrated, the lighting assembly 4 comprises a pair of left and right units formed, each one, from multiple LED lights that can be selectively operated, so as to rotate the orientation of the light beam F.

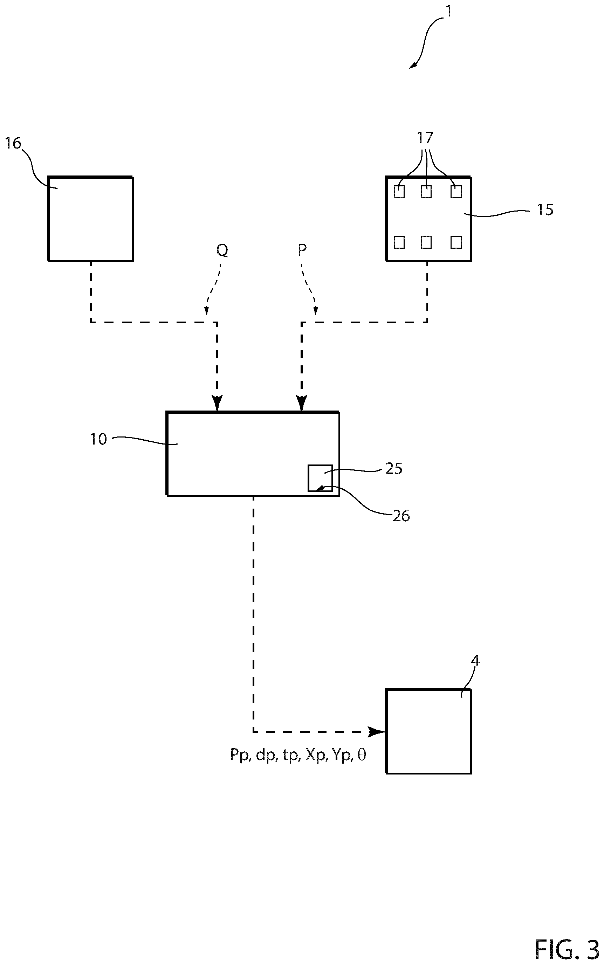

The motor vehicle 1 also comprises a processing unit 10 (only schematically illustrated in Figure 3) programmed to control the lighting assembly 4, so as to adjust the orientation of the light beam F on a plane orthogonal to the axis Z and arranged, in use, horizontally.

More specifically, the processing unit 10 is programmed to adjust the orientation of the light beam F on both sides of the motor vehicle 1.

The motor vehicle 1 also comprises, only schematically illustrated in Figure 3:

- a database 15 comprising multiple maps 17 defining a road path P of the motor vehicle 1; and
- a device 16, for example a GPS receiver, able to acquire the current position of the motor vehicle 1 on the path P.

Advantageously, the processing unit 10 is programmed (Figure 2) for:

- acquiring a map 17 of a path P followed by the motor vehicle 1 from the database 15;
- acquiring a current position Q of the motor vehicle 1 along the path P from the device 16;
- defining a point $P_p$ of the path P to which to orient the light beam F, based on the map 17 and on the above-mentioned current position Q; and
- rotating the light beam F relative to the motor vehicle 1 so as to light the point $P_p$ before the motor vehicle 1 reaches the point $P_p$.

More specifically, the processing unit 10 is programmed to continuously process over time a value of an angle θ of rotation of an axis A of the light beam F relative to the direction X of the motor vehicle 1, so as to light a region 40 of the path containing the point $P_p$.

It is important to highlight that the rotation of the light beam F occurs without its being necessary to act on a steering mechanism of the motor vehicle 1.

The axis A indicates the symmetry axis of the two components of the light beams F generated by the respective headlamps 6 or unit of the lighting assembly 4.

In particular, the map 17 comprises, among other things, multiple straight sections 30 (only one of which is illustrated, for simplicity, in Figure 2) and multiple curved sections 31 (only of which is illustrated for simplicity in Figure 2).

For illustrative simplicity, reference will be made, below in this description, to just one section 30 and to the only section 31 immediately subsequent to it along the path P.

With reference to Figure 2, the section 31 extends between one initial end 32 arranged at the end of the section 30 and one end 33 that is terminal with reference to the forward direction of the motor vehicle 1 along the path P.

The processing unit 10 is programmed to:

- define a time interval ($t_p$); and
- process a distance $d_p$ between the point $P_p$ and the motor vehicle 1, based on said time interval $t_p$ and on a moving speed of the motor vehicle 1.

More precisely, the distance $d_p$ is equal to the product of the time interval $t_p$ and the moving speed of the motor vehicle 1.

The distance $d_p$ is measured along a curved abscissa s parallel to the path P.

In particular, the time interval $t_p$ represents how much earlier the axis A of the light beam F is rotated by an angle θ relative to the moment when the motor vehicle 1 reaches the end 32 of the section 31.

The processing unit 10 is also programmed for:

- processing the coordinates $xP_p$, $yP_p$ of said point $P_p$ relative to the motor vehicle 1 placed at a distance $d_p$ from the motor vehicle along the curved abscissa s parallel to the path P; and
- controlling the lighting assembly 4 to rotate the light beam F by the angle θ relative to the motor vehicle 1, based on said coordinates $xP_p$, $yP_p$ of said point $P_p$ so as to light the region 40 of the section 31 containing the point $P_p$.

The angle θ is processed, in the example illustrated, as $atan(\frac{yP_p}{xP_p})$.

In particular, the processing unit 10 comprises a storing stage 25 (only schematically illustrated in Figure 3) in which a table 26 (also only schematically illustrated in Figure 3) is stored, which associates multiple values of the time interval $t_p$ with the corresponding values of the speed of the motor vehicle 1.

In the example illustrated, the table 26 associates increasing values of the time interval tp with the corresponding values of the moving speed of the motor vehicle 1 parallel to the axis X.

In one embodiment, the values of the time interval $t_p$ contained in the table 26 increase (decrease) with the decreasing (increasing) of the values of the moving speed of the motor vehicle 1 parallel to the axis X.

The values of the time interval $t_p$ contained in the table 26 preferably increase (decrease) linearly as the values of the moving speed of the motor vehicle 1 parallel to the axis X decrease (increase). In particular, a piece of software is uploaded to the processing unit 10 and implements an algorithm that generates the value of the angle θ as described earlier.

The operation of the motor vehicle 1 is described, at first, with reference to the condition of Figure 2, wherein the motor vehicle 1 follows a straight section 30 of the path P in the direction of the section 31 immediately subsequent to the path P.

The processing unit 10 continuously acquires over time the map 17 associated with the path P from the database 15 and the current position Q of the motor vehicle 1 from the device 16.

The processing unit 10 also processes continuously over time the value of the angle $\theta$ of rotation of the axis A of the light beam F so as to light the region 40 of the section 31 of the path P containing the point $P_p$ before the motor vehicle 1 reaches the end 32 of the section 31.

More specifically, the processing unit 10 defines the time interval $t_p$ based on the moving speed of the motor vehicle 1.

The processing unit 10 also processes the value of the distance $d_p$ between the point $P_p$ and the motor vehicle 1 along the curved abscissa s parallel to the path P, based on the time interval $t_p$ and a moving speed of the motor vehicle 1.

Finally, the processing unit 10 processes the coordinates $xP_p$, $yP_p$ of said point $P_p$ relative to the motor vehicle 1 based on the distance $d_p$ measured along the curved abscissa s parallel to the path P; and rotates the axis A of the light beam F of the angle $\theta$ relative to the direction X based on said coordinates $xP_p$, $yPp$ of said point $P_p$, so as to light the region 40 of the section 31 containing the point $P_p$.

The advantages enabled by the present invention will be apparent from an examination thereof.

More specifically, the processing unit 10 rotates the axis A of the light beam F so as to light the region 40 comprising the point $P_p$ defined based on the map 17 and the path 16, before the motor vehicle reaches the region 40 comprising the point $P_p$.

In this way, the light beam F illuminates the region 40 when the driver turns their gaze on the region 40 itself before the motor vehicle reaches the end 31 of the section 30.

As a result, the risk that the driver does not see suitably in advance obstacles or people present in the region 40 towards which the motor vehicle 1 is proceeding is largely avoided or at least reduced.

This results in a substantial improvement in the safety and comfort of driving associated with the motor vehicle 1.

Finally, it is clear that changes may be made to the method and motor vehicle 1, and variations produced thereto, according to the present invention that, in any case, do not depart from the scope of protection defined by the claims.

**Claims**

1. A method to control the orientation of a light beam (F) for a motor vehicle (1) comprising the steps of:

   i) adjusting the orientation of a light beam (F) arranged at the front relative to a normal forward moving direction of said motor vehicle (1);
   ii) acquiring a map (17) of a path (P) followed by said motor vehicle (1);
   iii) acquiring a current position (Q) of said motor vehicle (1) along said path (P); and
   iv) defining a point ($P_p$) of said path (P) to which to orient said light beam (F), based on said map (17) and on said current position (Q); and
   v) rotating said light beam (F) relative to said motor vehicle (1) so as to light said point ($P_p$) before said motor vehicle (1) reaches said point ($P_p$);

   said step iv) comprising the steps of:

   vi) defining a time interval ($t_p$); and
   vii) processing a distance ($d_p$) between said point ($P_p$) and said motor vehicle (1) along a curved abscissa (s) parallel to said path (P), based on said time interval ($t_p$) and on a moving speed of said motor vehicle (1);

   **characterized in that** it comprises the step viii) of storing a table (26) associating said time interval ($t_p$) with said moving speed of said motor vehicle (1);
   said table (26) associating increasing values of said time interval ($t_p$) with corresponding decreasing values of said moving speed of said motor vehicle (1).

2. The method according to claim 1, **characterised in that** said table (26) associates linearly increasing values of said time interval ($t_p$) with corresponding, linearly decreasing values of said moving speed of said motor vehicle (1) .

3. The method according to claim 1 or 2, **characterized in that** said step iv) comprises the steps of:

   ix) processing the coordinates ($xP_p$, $yP_p$) of said point ($P_p$) relative to said motor vehicle (1); and
   x) orienting said light beam (F) by an angle ($\theta$) relative to a first, longitudinal axis (X) of said motor vehicle (1), based on said coordinates ($xP_p$, $yP_p$) of said point ($P_p$).

4. The method according to any one of the preceding claims, **characterized in that** said step v) comprises the step xi) of rotating a headlamp and/or the step xii) of selectively turning on and off one or more LEDs of a lighting device (4).

5. The method according to any of the previous claims, **characterized in that** said step v) comprises the step xiii) of orienting said light beam (F) in a plane orthogonal to a second axis (Z) of said motor vehicle (1); said second axis (Z) being orthogonal to said first longitudinal axis (X) of said motor vehicle (1) and orthogonal to a normal forward moving direction of said motor vehicle (1) and orthogonal to a third transverse axis (Y) of said motor vehicle (1) and orthogonal to said first axis (X).

6. A computer product loadable into the memory of a processing unit (14) and capable of implementing, when it is executed, the steps of a method according to any one of the claims from 1 to 5.

7. A motor vehicle (1) comprising:

- a lighting device (4) designed to generate an orientable light beam (F) arranged at the front relative to a normal forward moving direction of said motor vehicle (1) ;
- a database (15) comprising a map (17) of a path (P) followed, in use, by said motor vehicle (1);
- acquisition means (16) acquiring a current position (Q) of said motor vehicle (1); and
- a processing unit (10) programmed to adjust the orientation of said light beam (F);

said processing unit (10) being programmed to:

i) acquire said map (17) from said database (15);
ii) acquire a current position (Q) of said motor vehicle (1) along said path (P) from said acquisition means (16);
iii) define a point ($P_p$) of said path (P) to which to orient said light beam (F), based on said map (17) and on said current position (Q); and
iv) rotate said light beam (F) relative to said motor vehicle (1) so as to light said point ($P_p$) before said motor vehicle (1) reaches said point ($P_p$);

said processing unit (10) also being programmed to:

- define a time interval ($t_p$); and
- process a distance ($d_p$) between said point ($P_p$) and said motor vehicle (1) along a curved abscissa (s) parallel to said path (P), based on said time interval ($t_p$) and on a moving speed of said motor vehicle (1);
**characterized in that** said processing unit (10) comprises a storing stage (25), where a table (26) is stored, which associates said time interval ($t_p$) with said moving speed of said motor vehicle (1);
said table (26) associating increasing values of said time interval ($t_p$) with corresponding decreasing values of said moving speed of said motor vehicle (1).

8. The motor vehicle according to claim 7, **characterized in that** said processing unit (10) is further programmed to:

- process the coordinates ($xP_p$, $yP_p$) of said point ($P_p$) relative to said motor vehicle (1); and
- orient said light beam (F) with an angle ($\theta$) relative to a fixed direction of said motor vehicle (1), based on said coordinates ($xP_p$, $yP_p$) of said point ($P_p$).

9. The motor vehicle according to claim 7 or 8, **characterized in that** said lighting device (4) comprises, in turn:

- an orientable headlamp (6); and/or
- a plurality of LEDs, which can selectively be activated.

10. The motor vehicle according to any of the claims from 7 to 9, **characterized in that** said light beam (F) is orientable in a plane orthogonal to a second axis (Z) of said motor vehicle (1); said second axis (Z) being orthogonal to said first longitudinal axis (X) of said motor vehicle (1), orthogonal to a normal forward moving direction of said motor vehicle (1), and orthogonal to a third transverse axis (Y) of said motor vehicle (1) and orthogonal to said first axis (X).

11. The method according to any of claims 7 to 10, **characterised in that** said table (26) associates linearly increasing values of said time interval ($t_p$) with corresponding, linearly decreasing values of said moving speed of said motor vehicle (1).

FIG. 1

FIG. 2

1

16

17

15

Q          P

10

25

26

Pp, dp, tp, Xp, Yp, θ

4

FIG. 3

Europäisches
Patentamt

European
Patent Office

Office européen
des brevets

# EUROPEAN SEARCH REPORT

Application Number

EP 23 19 6488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/105912 A1 (HORII YASUTOSHI [JP] ET AL) 23 April 2009 (2009-04-23) * paragraphs [0002], [0066], [0070], [0076], [0102], [0103], [0104], [0105]; figure 7 * | 1-11 | INV. B60Q1/12 F21W102/19 |
| X | KR 101 335 630 B1 (SL SEOBONG CORP [KR]; SL CORP [KR]) 3 December 2013 (2013-12-03) * paragraphs [0021], [0027], [0028], [0034], [0037], [0039], [0040], [0042], [0062], [0063], [0069]; figure 2 * | 1-11 | |
| X | US 2012/044708 A1 (SCHMIDT CHRISTOPH [DE] ET AL) 23 February 2012 (2012-02-23) * paragraphs [0016] - [0021], [0020], [0042]; figures 1,3a,3b * | 1-11 | |
| A | EP 2 181 891 A2 (HELLA KGAA HUECK & CO [DE]) 5 May 2010 (2010-05-05) * paragraphs [0007], [0008]; figure 5 * | 1-11 | |
| X | US 2002/039295 A1 (KOBAYASHI SHOJI [JP] ET AL) 4 April 2002 (2002-04-04) * paragraphs [0075], [0076], [0078], [0113] - [0117]; figures 7,8,16 * | 1-11 | TECHNICAL FIELDS SEARCHED (IPC) B60Q F21W |
| A | US 2014/098551 A1 (KRAUSS ANDREAS [DE] ET AL) 10 April 2014 (2014-04-10) * paragraphs [0008], [0016] * | 1-11 | |

The present search report has been drawn up for all claims

| Place of search | Date of completion of the search | Examiner |
|---|---|---|
| Munich | 21 December 2023 | Guénon, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6488

This annex lists the patent family members relating to the patent documents cited in  the above-mentioned European search report.
The members are as contained in the European Patent Office EDP file on
The European Patent Office is in no way liable for these particulars which are merely given for the purpose of information.

21-12-2023

| Patent document cited in search report | | Publication date | Patent family member(s) | | Publication date |
|---|---|---|---|---|---|
| US 2009105912 | A1 | 23-04-2009 | DE 102004036226 | A1 | 21-04-2005 |
| | | | US    2005027419 | A1 | 03-02-2005 |
| | | | US    2009105912 | A1 | 23-04-2009 |
| KR 101335630 | B1 | 03-12-2013 | NONE | | |
| US 2012044708 | A1 | 23-02-2012 | DE 102010039399 | A1 | 23-02-2012 |
| | | | US    2012044708 | A1 | 23-02-2012 |
| EP 2181891 | A2 | 05-05-2010 | DE 102008054005 | A1 | 06-05-2010 |
| | | | EP     2181891 | A2 | 05-05-2010 |
| US 2002039295 | A1 | 04-04-2002 | DE    10139150 | A1 | 28-02-2002 |
| | | | FR     2812845 | A1 | 15-02-2002 |
| | | | JP     3753932 | B2 | 08-03-2006 |
| | | | JP   2002052975 | A | 19-02-2002 |
| | | | US   2002039295 | A1 | 04-04-2002 |
| US 2014098551 | A1 | 10-04-2014 | CN    103707802 | A | 09-04-2014 |
| | | | DE 102012109423 | A1 | 12-06-2014 |
| | | | EP     2716497 | A1 | 09-04-2014 |
| | | | US   2014098551 | A1 | 10-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IT 102022000018474